# EUROPEAN PATENT SPECIFICATION

(11) **EP 0 801 218 B1**
(45) Date of publication and mention of the grant of the patent: **11.07.2001**
(21) Application number: 96830200.0
(22) Date of filing: 09.04.1996
(51) Int. Cl.: F02C 3/28, C10J 3/00, C10J 3/44

(54) **Method and system of producing and utilizing fuel gases, in particular gases obtained from biomasses or refuse**
Methode und System zur Erzeugung und Verwendung von Brenngasen, insbesondere Gasen hergestellt aus Biomassen und Abfall
Méthode et système pour produire et utiliser des gaz combistibles, en particulier des gaz obtenus à partir de biomasses et déchet

(43) Date of publication of application: 15.10.1997
(73) Proprietor: ANSALDO RICERCHE S.r.l., 16161 Genova (IT)
(72) Inventor: Avanzini, Piergiulio, 16030 Moneglia (IT); Calabro, Bruno, 16161 Genova (IT); Repetto, Francesco, 16016 Cogoleto (IT); Sadowski, Stefano, 16146 Genova (IT)
(74) Representative: Plebani, Rinaldo

(56) References cited:
- EP-A- 0 153 235
- EP-A- 0 676 465
- WO-A-95/25151
- GB-A- 2 180 849
- US-A- 4 638 629

## Description

The present invention relates to a method and system of producing and immediately utilizing, with a high thermal yield, nonfossil fuel gases, in particular, produced by gasifying refuse or refuse-derived fuels (RDF) and/or biomasses (wood shavings, fermentation sludge, etc.). The present invention is therefore particularly advantageous ecologically by providing a renewable source of energy and at the same time a means of disposing of refuse and/or potentially pollutant waste.

One of the cheapest and ecologically safest ways of disposing of masses of at least partially combustible waste, such as solid urban refuse, possibly also containing industrial waste and/or biological fermentation sludge, is to gasify the masses (possibly reduced to pellets beforehand) in special reactors. Gasifiers of this type are already well known (J.M.Double, "The design, evaluation and costing of biomass gasifiers", Aston University, Birmingham, September, 1988), and many are already in operation, such as the one at Greve in Chianti for disposing of the urban refuse of Florence. When scrubbed, the fuel gases produced by the gasifier may be burned in an internal combustion engine for producing mechanical or electric energy.

The main drawback of the above refuse processing and recycling method is that the fuel gases produced by the gasifier are rich in condensable substances, i.e. tars and other similar chemical compounds, with a relatively low condensation point (well below 200°C), so that, unless the fuel gases are appropriately treated to eliminate the tars, these normally condense and create serious problems at the fuel supply stage to the engine. For example, if, as in most known systems, a diesel engine is used, the tars may possibly condense in and so result in rapid scaling of the fuel supply valves.

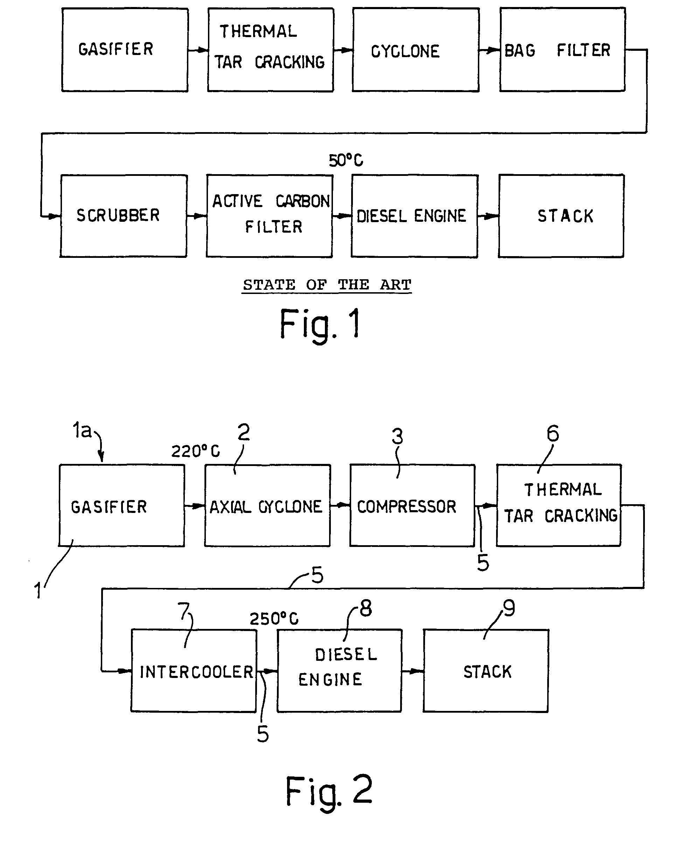

To eliminate the tars prior to combustion of the gases, recourse is normally made to complex systems of the type shown in Figure 1: the gases from the gasifier are subjected to total pyrolysis, normally in a dolomite fluid-bed reactor, to considerably raise the temperature of the gases (from about 150 to 600°C or over); the gases are dedusted in a cyclone, filtered, and fed into a scrubber where they are cooled through cold water screens; any remaining tar is condensed into minute drops, which are trapped and removed by the water screens; and, to ensure complete tar removal, an activated-carbon filter is provided immediately upstream from the engine.

A sophisticated cleaning system of the above type is obviously expensive both to install and run, even to the extent of reducing, when not altogether eliminating, the economic advantages afforded by gasification and combustion recycling technology. Moreover, the tars eliminated are normally substances with a good calorific value, so that the cleaned fuel gases supplied to the engine are robbed of large part of their initial calorific value (at the output of the gasifier), and must frequently be integrated with fossil fuels, e.g. methane, to ensure correct combustion. As such, the overall efficiency of known methods is extremely low (about 22-27%) which further reduces the economic advantage of the recycling process. Finally, the tars trapped in the scrubbing water, and which are highly pollutant, must in turn be removed before draining off the water, thus further increasing cost

These drawbacks are not overcome by the method known from WO-A-95/25151, in which tars are completely removed from the gas stream by thermal cracking. It is also known from US-A-4 638 629 a method in which tars are supplied to a combustion turbine at a temperature above the temperature which would condense tars: since both high and low molecular-weight tars are contained in the gas, energy generation process efficiency is reduced.

It is an object of the present invention to overcome the aforementioned drawbacks by providing a method of recycling/utilizing masses or biomasses of waste by gasification and combustion, which presents a high degree of overall efficiency, does not require complex and/or high-cost cleaning systems, and enables at least part of the calorific value of the tars to be exploited with no risk to the engine at the combustion stage.

According to the present invention, there is provided a method of producing and utilizing fuel gases, in particular produced from biomasses or refuse (solid urban refuse SUR, or refuse-derived fuel RDF), the method comprising a gasification stage wherein an at least partly oxidizable solid or fluid mass is at least partly converted into fuel gases; and a combustion stage wherein said fuel gases are burned, and which is performed as part of a thermodynamic cycle for generating power; said fuel gases are supplied to the combustion stage at a temperature higher than the minimum condensation temperature of condensable substances (tars) in the fuel gases; after the gasification stage and before the combustion stage, the fuel gases are subjected to a partial, even catalyzed, tar cracking stage conducted in such conditions as to reduce below a predetermined value the average molecular weight and the partial pressure of the condensable substances in the gases; the cracking stage is also assisted by subjecting the gases to a compression stage to increase the temperature and pressure of the gases; and the compression stage may be conducted before or after gasification, or even in the gasifier itself if appropriately pressurized. The higher-molecular-weight tars are thus eliminated by conversion at the cracking stage into lower-molecular-weight compounds (that is, the heavy compounds are cracked into lighter compounds, but with substantially no loss in total mass), and, as opposed to being removed from the gases, remain in the form of lower-molecular-weight tars with a higher condensation temperature, so that the initial calorific value of the fuel gases remains substantially unchanged up to the combustion stage.

By supplying the fuel gases to the engine separately from the combustion air to prevent cooling of the gases, the above conversion provides for supplying the gases to the engine at a temperature higher than the condensation temperature of the tars in the gases, and with no drawbacks (e.g. impaired volumetric efficiency) and no loss of energy. In other words, the method according to the present invention provides for improved electric efficiency, with no need for expensive, high-cost cleaning systems as in known methods, by simply employing a cyclone immediately downstream from the gasification stage, and providing for partial catalyzed thermal cracking of the tar. As such, the economic advantages of the method according to the invention are greatly enhanced as compared with known methods.

Finally, the present invention also relates to a system for producing and utilizing fuel gases, in particular produced from biomasses or refuse, the system comprising a gasifier; a cracking reactor for cracking condensable substances (tars); and an internal combustion engine in which said fuel gases are burned to generate power; characterized in that said cracking reactor provides for only partly cracking said condensable substances; and said system also comprises means for supplying the engine with the fuel gases separately from the combustion supporter, and at a temperature higher than that of the combustion supporter and higher than the minimum condensation temperature of the residual condensable substances.

Preferably, the system is equipped with a turbocharger powered by the exhaust gases of the engine and for compressing the fuel gases from the gasifier upstream from the partial cracking reactor. The gases may be compressed before or after gasification, or after cracking the tar, or even in the gasifier itself if this is pressurized.

A non-limiting embodiment of the present invention will be described by way of example with reference to the accompanying drawings, in which:
- Figure 1 shows a block diagram of known methods;
- Figure 2 shows a block diagram of the method according to the invention;
- Figure 3 shows, schematically, part of a system for implementing the Figure 2 method.

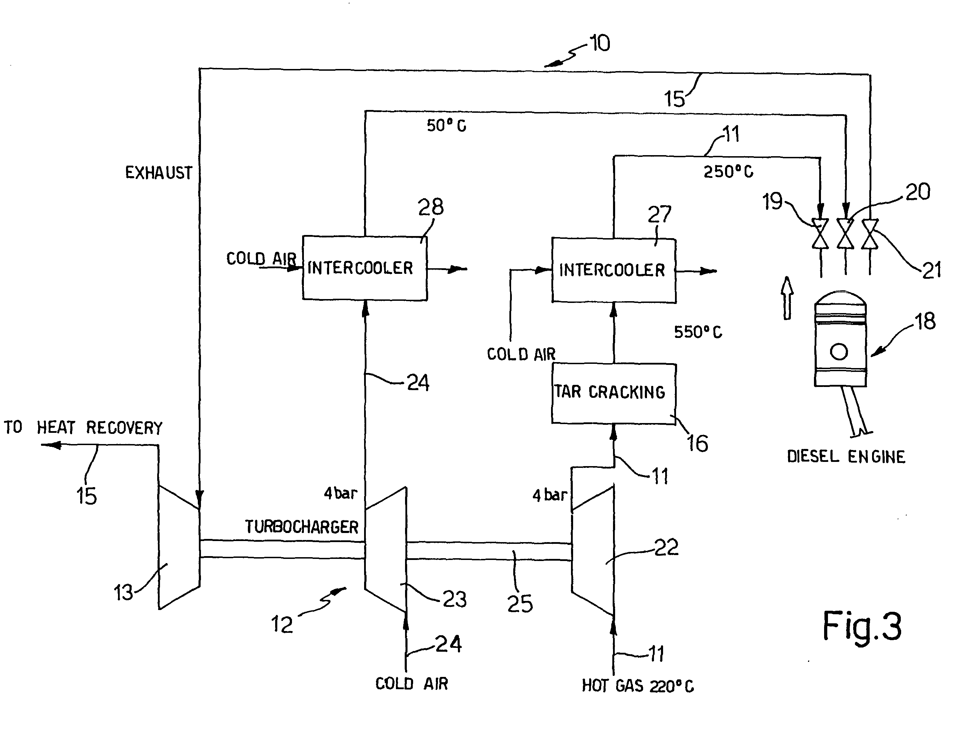

With reference to Figures 2 and 3, the method according to the present invention provides for producing fuel gases, particularly from biomasses or refuse, and using the gases immediately for generating power. The method comprises a known gasification stage, indicated by block 1 in Figure 2, wherein an at least partly oxidizable, substantially solid or even fluid (liquid or paste) mass is at least partly converted into fuel gases in a known gasifier 1a. Prior to gasification, the mass of refuse is preferably formed into pellets in a known system (not shown), possibly with the addition of other material. More details about biomass gasification may be found in publication (1) "The design, evaluation and costing of biomass gasifiers", J.M.Double, Aston University, Birmingham, September, 1988, the content of which is included herein as required by way of reference.

After gasification stage 1, the resulting fuel gases, which are at a temperature of about 220°C, are dedusted, e.g. by feeding them through a cyclone 2 of any known type, and are then subjected to a compression stage 3 to bring the relative pressure of the gases to a predetermined value of, say, 2-4 bar (i.e. to a pressure of 2-4 bar above atmospheric pressure) and so increase the temperature of the gases accordingly. At the output of stage 3, the stream of fuel gases, shown by arrow 5, presents a temperature of about 350°C, at which all the tars in the stream are in the gaseous state.

The stream 5 of compressed fuel gases is then subjected to a cracking stage 6 wherein, as opposed to total cracking as in known methods, the tars are only partly cracked in a dolomite fixed-bed cracking reactor 16 (Figure 3) sized in known manner according to the principles of publication (2) "Product yields and kinetics from the vapor phase cracking of wood pyrolysis tars", M.L.Boroson et al., AIChE Journal, January 1989, Vol. 35, N. 1, the content of which is included herein as required by way of reference.

In practice, reactor 16 is so sized that the conditions produced inside at the cracking stage are such as only to eliminate, by cracking into lower-molecular-weight molecules, the higher-molecular-weight condensable substances, in particular, those with a molecular weight of over 900-1200 daltons, i.e. with a condensation temperature of over 200°C, so as to reduce below a predetermined value the average molecular weight and the partial pressure of the condensable substances or tars in the gases. According to publication (2), in fact, being thermally unstable, the heavier tar molecules are converted at relatively low temperature into lower-molecular-weight molecules, so that even a very small tar conversion (less than 8-9%), which therefore has no appreciable effect on the calorific value of the gases in stream 5, causes a significant reduction in the average molecular weight and, hence, the condensation temperature of the tars in the gases. Downstream from stage 6, therefore, gas stream 5 presents a high temperature (about 550°C) due to the heat liberating reactions in reactor 16, and a tar content which is substantially unchanged (or only slightly reduced) but with a far lower average molecular weight. A cooling stage 7 is then performed to partly cool gas stream 5 to a temperature Ta higher than the minimum condensation temperature - about 200°C - of the condensable substances (tars) in the gases, i.e. the condensable substances remaining after stage 6. Preferably, the output temperature of cooling stage 7 is 250°C. The compressed gases in stream 5 at temperature Ta are then subjected to a final stage 8 wherein they are burned as part of a thermodynamic cycle for generating power, and the burned gases (by now no longer pollutant by mostly comprising carbon dioxide and water) are exhausted at stage 9 at a sufficiently low temperature (e.g. 130°C) to also preclude any possibility of thermal atmospheric pollution.

According to the invention, combustion stage 8 is performed by means of an internal combustion engine supplied separately with the hot fuel gases in stream 5 and with a combustion supporter, normally air.

According to a preferred embodiment of the invention, the combustion stage is performed by supplying fuel gas stream 5, separately from the combustion air, to a diesel internal combustion engine 18 (Figure 3), and more specifically through valves 19 differing from the air supply valves 20 (Figure 3). The temperature of the combustion air is also maintained much lower than Ta (e.g. around 50°C) to achieve a good volumetric efficiency of engine 18.

Number 10 in Figure 3 indicates a system (shown only partly) for implementing the method described, and which comprises known gasifier la and cyclone 2 (shown in block form in Figure 2) for supplying a fuel gas circuit 11 (Figure 3) with the gases produced by gasifier la, dedusted, and at a temperature of about 220°C. System 10 (Figure 3) also comprises, hydraulically in series with circuit 11, cracking reactor 16 for partly cracking the condensable substances (tars); engine 18, in this case a diesel engine; and a compressor 12 upstream from cracking reactor 16, downstream from cyclone 2, and also hydraulically in series with circuit 11.

Compressor 12 provides for pressurizing the fuel gases to a predetermined value (e.g. said 4 bar relative pressure) and supplying the compressed gases to cracking reactor 16, and, in this case, is a turbocharger powered by a turbine 13 supplied with the burned gases produced by engine 18 and exhausted by engine 18 into a circuit 15 via exhaust valves 21. Turbocharger 12 comprises at least two separate compression stages: a first stage 22 in series with circuit 11 and upstream from reactor 16; and a second stage 23 in series with a circuit 24 for supplying combustion air to engine 18. Stages 22 and 23 are located along the same axis 25, and are therefore both powered by turbine 13.

An intercooler 27 is provided downstream from reactor 16, upstream from engine 18, and in series with circuit 11, for performing stage 7 wherein the compressed fuel gases are cooled to temperature Ta for supply to engine 18. Intercooler 27 is air-cooled, and the heat withdrawn may be used for preheating other fluids. A further air-cooled intercooler 28 is provided in series with circuit 24, for cooling the air compressed in stage 23 to about 50°C, which is the temperature at which the air is supplied via valves 20 to engine 18, separately from, at a much lower temperature than, but at the same 4 bar relative pressure as the fuel gases. When the combustion air and stream 5 of the gases containing the tars eventually mix, it is inside the combustion chambers of engine 18, so that, any tar condensation at this point takes place inside a combustion chamber and in the presence of a flame capable of immediately burning and neutralizing it.

## Claims

1. A method of producing and utilizing fuel gases, in particular produced from biomasses or refuse, the method comprising a gasification stage (1) wherein an at least partly oxidizable solid or fluid mass is at least partly converted into fuel gases; and a combustion stage (8) wherein said fuel gases are burned, and which is performed as part of a thermodynamic cycle for generating power; said fuel gases being supplied to the combustion stage (8) at a temperature higher than the minimum condensation temperature of condensable substances (tars) in the fuel gases; the method being characterized in that, after the gasification stage (1) and before the combustion stage (8), said fuel gases are subjected to a partial cracking stage (6) conducted in such conditions as to reduce below a predetermined value the average molecular weight and the partial pressure of said condensable substances in the gases.

2. A method as claimed in Claim 1, characterized in that the fuel gases produced at the gasification stage (1) are subjected to a compression stage (3) to increase the temperature and pressure of the fuel gases.

3. A method as claimed in Claim 2, characterized in that the fuel gases are brought to a relative pressure of 2-4 bar and then fed through a cracking reactor (16).

4. A method as claimed in any one of the foregoing Claims, characterized in that said partial cracking stage (6) provides for only eliminating the higher-molecular-weight condensable substances, in particular those with a molecular weight of over 900 daltons, i.e. presenting a condensation temperature of over 200°C.

5. A method as claimed in any one of the foregoing Claims, characterized in that, immediately after said partial cracking stage (6) and before said combustion stage (8), said fuel gases are cooled (7) to a temperature (Ta) higher than the condensation temperature of the residual condensable substances.

6. A method as claimed in Claim 5, characterized in that the fuel gases are supplied to the combustion stage (8) at a minimum temperature of about 200°C and separately from the combustion supporter employed.

7. A method as claimed in any one of the foregoing Claims, characterized in that said combustion stage (8) is performed by supplying said fuel gases to a diesel internal combustion engine (18) separately from the combustion air, and in particular via different valves (19, 20); the temperature of the combustion air being maintained much lower than that of the fuel gases to achieve a good volumetric efficiency.

8. A method as claimed in any one of the foregoing Claims, characterized in that, immediately downstream from the gasification stage (1), the fuel gases are dedusted (2) by feeding them through a cyclone, even an axial cyclone.

9. A method as claimed in any one of the foregoing Claims, characterized in that said gasification stage (1) is conducted at a pressure greater than atmospheric pressure, so that the fuel gases at the output of said gasification stage (1) are already pressurized to a predetermined pressure.

10. A system (10) for producing and utilizing fuel gases, in particular produced from biomasses or refuse, the system comprising a gasifier (1a); a cracking reactor (16) for cracking condensable substances (tars) ; and an internal combustion engine (18) in which said fuel gases are burned to generate power; characterized in that said cracking reactor (16) provides for only partly cracking said condensable substances; said system also comprising means (11, 19) for supplying said engine (18) with said fuel gases separately from the combustion supporter, and at a temperature higher than that of the combustion supporter and higher than the minimum condensation temperature of the residual condensable substances.

11. A system as claimed in Claim 10, characterized by comprising pressurizing means for pressurizing said fuel gases.

12. A system as claimed in Claim 11, characterized in that said pressurizing means comprise a compressor (12) located hydraulically upstream from the cracking reactor (16) and for pressurizing said fuel gases to a predetermined value and then supplying the compressed fuel gases to the cracking reactor (16); said compressor (12) being a turbocharger powered by burned exhaust gases produced by said engine (18), and comprising at least two separate compression stages, a first (22) in series with a circuit (11) for circulating said fuel gases, and a second (23) in series with a circuit (24) for supplying combustion air to the engine.

13. A system as claimed in Claim 11, characterized in that the gasifier (la) is pressurized, so that the fuel gases issuing from the gasifier (la) are already at the predetermined pressure.

14. A system as claimed in Claims 10 to 13, characterized by comprising a cyclone (2) for dedusting the fuel gases and located hydraulically downstream from the gasifier (la) and upstream from said compressor (12).

15. A system as claimed in one of the foregoing Claims from 10 to 14, characterized in that said engine (18) is a diesel internal combustion engine equipped with separate valves (19, 20) for supplying said fuel gases and the combustion air.

## Patentansprüche

1. Verfahren zum Erzeugen und zur Nutzung von brennbaren technischen Gasen, die insbesondere aus Biomassen und Abfall erzeugt werden, wobei das Verfahren aufweist:
- eine Vergasungsstufe (1), in der ein zumindest teilweise oxidierbarer Feststoff oder eine Fluidmasse zumindest teilweise in brennbare technische Gase umgewandelt wird; und
- eine Verbrennungsstufe (8), in der die brennbaren technischen Gase verbrannt werden und die als Teil eines thermodynamischen Kreisprozesses zur Energieerzeugung ausgeführt wird; wobei die brennbaren technischen Gase der Verbrennungsstufe (8) mit einer Temperatur zugeführt werden, die höher als die Mindestkondensationstemperatur von kondensierbaren Substanzen (Teeren) in den brennbaren technischen Gasen ist;
wobei das Verfahren dadurch gekennzeichnet ist,
daß die brennbaren technischen Gase nach der Vergasungsstufe (1) und vor der Verbrennungsstufe (8) einer Teilkrackstufe (6) unterzogen werden, die unter solchen Bedingungen ausgeführt wird, daß das mittlere Molekulargewicht und der Partialdruck der kondensierbaren Substanzen in den Gasen unter einen vorbestimmten Wert gesenkt werden.

2. Verfahren nach Anspruch 1,
dadurch gekennzeichnet,
daß die in der Vergasungsstufe (1) erzeugten brennbaren technischen Gase einer Verdichtungsstufe (3) unterzogen werden, um die Temperatur und den Druck der brennbaren technischen Gase zu erhöhen.

3. Verfahren nach Anspruch 2,
dadurch gekennzeichnet,
daß die brennbaren technischen Gase auf einen relativen Druck von 2 bis 4 bar gebracht und dann durch einen Krackreaktor (16) geleitet werden.

4. Verfahren nach einem der vorhergehenden Ansprüche,
dadurch gekennzeichnet,
daß die Teilkrackstufe (6) nur die kondensierbaren Substanzen mit höherem Molekulargewicht entfernt, insbesondere solche mit einem Molekulargewicht von mehr als 900 Dalton, d.h. diejenigen, die eine Kondensationstemperatur von über 200 °C haben.

5. Verfahren nach einem der vorhergehenden Ansprüche,
dadurch gekennzeichnet,
daß die brennbaren technischen Gase unmittelbar nach der Teilkrackstufe (6) und vor der Verbrennungsstufe (8) auf eine Temperatur (Ta) abgekühlt werden (7), die höher als die Kondensationstemperatur der restlichen kondensierbaren Substanzen ist.

6. Verfahren nach Anspruch 5,
dadurch gekennzeichnet,
daß die brennbaren technischen Gase der Verbrennungsstufe (8) mit einer Mindesttemperatur von ca. 200 °C und getrennt von dem verwendeten Verbrennungsbeschleuniger zugeführt werden.

7. Verfahren nach einem der vorhergehenden Ansprüche,
dadurch gekennzeichnet,
daß die Verbrennungsstufe (8) ausgeführt wird, indem die brennbaren technischen Gase getrennt von der Verbrennungsluft und insbesondere über verschiedene Ventile (19, 20) einer Diesel-Brennkraftmaschine (18) zugeführt werden; wobei die Temperatur der Verbrennungsluft viel niedriger als die der brennbaren technischen Gase gehalten wird, um einen guten volumetrischen Wirkungsgrad zu erzielen.

8. Verfahren nach einem der vorhergehenden Ansprüche,
dadurch gekennzeichnet,
daß die brennbaren technischen Gase unmittelbar an der Abstromseite der Vergasungsstufe (1) entstaubt werden (2), indem sie durch einen Zyklon, insbesondere einen Axialzyklon, geleitet werden.

9. Verfahren nach einem der vorhergehenden Ansprüche,
dadurch gekennzeichnet,
daß die Vergasungsstufe (1) bei einem Druck ausgeführt wird, der höher als Atmosphärendruck ist, so daß die brennbaren technischen Gase am Ausgang der Vergasungsstufe (1) bereits auf einen vorbestimmten Druck gebracht sind.

10. System (10) zum Erzeugen und zur Nutzung von brennbaren technischen Gasen, die insbesondere aus Biomassen oder Abfall erzeugt werden, wobei das System folgendes aufweist:
- einen Vergaser (1a);
- einen Krackreaktor (16) zum Kracken von kondensierbaren Substanzen (Teeren); und
- eine Brennkraftmaschine (18), in der die brennbaren technischen Gase verbrannt werden, um Energie zu erzeugen;
dadurch gekennzeichnet,
daß der Krackreaktor (16) die kondensierbaren Substanzen nur teilweise krackt;
wobei das System ferner Einrichtungen (11, 19) aufweist, um der Maschine (18) die brennbaren technischen Gase getrennt von dem Verbrennungsbeschleuniger und mit einer Temperatur zuzuführen, die höher als die des Verbrennungsbeschleunigers und höher als die Mindestkondensationstemperatur der restlichen kondensierbaren Substanzen ist.

11. System nach Anspruch 10,
dadurch gekennzeichnet,
daß es eine Druckbeaufschlagungseinrichtung aufweist, um die brennbaren technischen Gase mit Druck zu beaufschlagen.

12. System nach Anspruch 11,
dadurch gekennzeichnet,
daß die Druckbeaufschlagungseinrichtung einen Verdichter (12) aufweist, der hydraulisch an der Aufstromseite des Krackreaktors (16) angeordnet ist und dazu dient, die brennbaren technischen Gase bis zu einem vorbestimmten Wert mit Druck zu beaufschlagen und dann die verdichteten brennbaren technischen Gase dem Krackreaktor (16) zuzuführen;
wobei der Verdichter (12) ein Turbolader ist, der von verbrannten Abgasen, die von der Maschine (18) erzeugt werden, angetrieben wird und mindestens zwei getrennte Verdichtungsstufen aufweist, und zwar eine erste Stufe (22) in Reihe mit einer Einrichtung (11) zum Umwälzen der brennbaren technischen Gase und eine zweite Stufe (23) in Reihe mit einer Einrichtung (24) zum Zuführen von Verbrennungsluft zu der Maschine.

13. System nach Anspruch 11,
dadurch gekennzeichnet,
daß der Vergaser (1a) mit Druck beaufschlagt wird, so daß die aus dem Vergaser (1a) ausströmenden brennbaren technischen Gase bereits auf dem vorbestimmten Druck sind.

14. System nach den Ansprüchen 10 bis 13,
dadurch gekennzeichnet,
daß es einen Zyklon (2) zum Entstauben der brennbaren technischen Gase aufweist, der hydraulisch an der Abstromseite des Vergasers (1a) und an der Aufstromseite des Verdichters (12) angeordnet ist.

15. System nach einem der Ansprüche 10 bis 14,
dadurch gekennzeichnet,
daß die Maschine (18) eine Diesel-Brennkraftmaschine ist, die mit getrennten Ventilen (19, 20) zum Zuführen der brennbaren technischen Gase und der Verbrennungsluft versehen ist.

## Revendications

1. Méthode pour produire et utiliser des gaz combustibles, en particulier des gaz produits à partir de biomasses ou de déchets, la méthode comportant une étape de gazéification (1) dans laquelle une masse fluide ou solide au moins partiellement oxydable est en partie convertie en gaz combustibles ; et une étape de combustion (8) dans laquelle ces gaz sont brûlés et qui est réalisée en tant que portion d'un cycle thermodynamique de génération d'énergie ; lesdits gaz combustibles étant envoyés vers l'étape de combustion (8) à une température supérieure à la température minimum de condensation des substances condensables (goudrons) dans les gaz combustibles, la méthode étant caractérisée en ce que, après l'étape de gazéification (1) et avant l'étape de combustion (8), lesdits gaz combustibles sont soumis à une étape de craquage partiel (6) réalisée dans des conditions appropriées pour réduire le poids moléculaire moyen et la pression partielle des produits condensables dans les gaz.

2. Méthode selon la revendication 1, caractérisée en ce que les gaz combustibles produits lors de l'étape de gazéification (1) sont soumis à une étape de compression (3) pour augmenter la température et la pression des gaz combustibles.

3. Méthode selon la revendication 2, caractérisée en ce que les gaz combustibles sont portés à une pression de 2 à 4 bars et envoyés au travers d'un réacteur de craquage (16).

4. Méthode selon l'une quelconque des revendications précédentes, caractérisée en ce que ladite étape de craquage partiel (6) a pour effet d'éliminer les seuls produits condensables de plus haut poids moléculaire, en particulier ceux d'un poids moléculaire supérieur à 900 daltons, c'est à dire présentant une température de condensation supérieure à 200°C.

5. Méthode selon l'une quelconque des revendications précédentes, caractérisée en ce que, immédiatement après ladite étape de craquage partiel (6) et avant l'étape de combustion (8), lesdits gaz combustibles sont refroidis (7) à une température (Ta) supérieure à la température de condensation des produits résiduels condensables.

6. Méthode selon la revendication. 5, caractérisée en que les gaz combustibles sont envoyés vers l'étape de combustion (8) à une température minimale de 200°C environ et de façon séparée du composant supportant la combustion.

7. Méthode selon l'une quelconque des revendications précédentes, caractérisée en que l'étape de combustion (8) est réalisée en envoyant les gaz combustibles dans un moteur diesel à combustion interne (18) séparément de l'air de combustion, et en particulier au travers de soupapes distinctes (19, 20) ; la température de l'air de combustion étant maintenue nettement plus basse que celle des gaz combustibles pour obtenir une bonne efficacité volumétrique.

8. Méthode selon l'une quelconque des revendications précédentes, caractérisée en ce que, immédiatement après l'étape de gazéification (1), les gaz combustibles sont dépoussiérés en les envoyant dans un cyclone, et même dans un cyclone axial.

9. Méthode selon l'une quelconque des revendications précédentes, caractérisée en ce que l'étape de gazéification (1) est réalisée à une pression supérieure à la pression atmosphérique, de telle sorte que les gaz combustibles à la sortie de ladite étape de gazéification (1) sont déjà comprimés à une pression prédéterminée.

10. Système (10) pour produire et utiliser des gaz combustibles, en particulier des gaz produits à partir de biomasses ou de déchets, le système comportant des moyens de gazéification (1a) ; un réacteur de craquage (16) pour craquer les produits condensables (goudrons) ; et un moteur à combustion interne (18) dans lequel lesdits gaz sont brûlés pour générer de l'énergie ; caractérisé en ce que ledit réacteur de craquage (16) effectue seulement un craquage partiel des produits condensables ; ledit système comportant également des moyens (11,19) pour alimenter ledit moteur (18) avec lesdits gaz combustibles séparément du composant supportant la combustion, et à une température supérieure à celle du composant supportant la combustion et supérieure à la température minimum de condensation des produits condensables résiduels.

11. Système selon la revendication 10, caractérisé en ce qu'il comporte des moyens générateurs de pression pour comprimer lesdits gaz combustibles.

12. Système selon la revendication 11, caractérisé en ce que les moyens générateurs de pression comportent un compresseur (12) placé hydrauliquement en amont du réacteur de craquage (16) pour comprimer lesdits gaz combustibles à une valeur prédéterminée et puis envoyer les gaz combustibles comprimés au réacteur de craquage (16) ; ledit compresseur (12) étant constitué d'un turbocompresseur entraîné par les gaz brûlés d'échappement produits par ledit moteur (18), et comportant deux étages de compression séparés, un premier étage en série avec un circuit (11) pour faire circuler les gaz combustibles et un second étage (23) en série avec un circuit (24) pour alimenter le moteur en air de combustion.

13. Système selon la revendication 11, caractérisé en ce que les moyens de gazéification (1a) sont pressurisés de telle sorte que les gaz combustibles sortant des moyens de gazéification (1a) sont déjà à la pression prédéterminée.

14. Système selon l'une des revendications 10 à 13, caractérisé en ce qu'il comporte un cyclone (2) pour dépoussiérer les gaz combustibles et situé hydrauliquement en aval des moyens de gazéification (la) et en amont dudit compresseur (12).

15. Système selon l'une quelconque des revendications 10 à 14, caractérisé en ce que le moteur est un moteur diesel à combustion interne équipé de soupapes séparées (19, 20) pour l'alimentation en gaz combustibles et en air de combustion.
